# EUROPEAN PATENT SPECIFICATION

(11) **EP 3 366 113 B1**
(45) Date of publication and mention of the grant of the patent: **08.01.2020**
(21) Application number: 17175043.3
(22) Date of filing: 08.06.2017
(51) Int. Cl.: A01G 9/14, A01G 31/02

(54) **PLANT CULTIVATION APPARATUS USING AN UP-DOWN SYSTEM**
PFLANZENZUCHTVORRICHTUNG MIT VERWENDUNG EINES UP-DOWN-SYSTEMS
APPAREIL DE CULTURE DE PLANTES FAISANT APPEL À UN SYSTÈME DE MONTÉE-DESCENTE

(30) Priority: 27.02.2017 KR 20170025429
(43) Date of publication of application: 29.08.2018
(73) Proprietor: Green Plus Co., Ltd., Yesan-gun, Chungcheongnam-do 32446 (KR); Park, Yeong Hwan, Gyeonggi-do 17782 (KR)
(72) Inventor: Park, Yeong Hwan, Gyeonggi-do, 17782 (KR)
(74) Representative: Beetz & Partner mbB

(56) References cited:
- EP-A1- 2 912 937
- CN-A- 101 120 643
- JP-A- 2002 034 337
- JP-A- 2004 275 178
- JP-A- 2005 013 047
- KR-B1- 101 697 120
- NL-A- 9 002 302

## Description

### [TECHNICAL FIELD]

The present invention relates to a plant cultivation apparatus using an up-down system, and more particularly, to a plant cultivation apparatus using an up-down system enabling mass production of plants by allowing the entire area of a greenhouse to be used as a cultivation space.

### [BACKGROUND ART]

In general, for cultivation with soil and hydroponics in a greenhouse, at least half of the area of the greenhouse is used for a passage of workers during seeding, cultivation work, or harvest. Thus, there was a problem that as the area for cultivation reduces in half, production volume reduces, for which not only production costs but also consumer prices increases, resulting in an increase in cost burden of both producers and customers.

In order to solve these problems, the present applicant has filed Korean Patent Application No. 2016-0069465 covering a plant cultivation apparatus including: a driving unit installed at trusses horizontally crossing top portions of a greenhouse and including a motor, a drive shaft, a plurality of driven shafts, and a plurality of worm gear reducers, a plurality of elevating units including a plurality of main sprockets axially fixed respectively to the plurality of driven shafts at regular intervals in a forward and backward direction, a chain having a main part interlocking with the center of the main sprocket, a left part directed downward from a left side of the main sprocket, and a right part directed downward from a right side of the main sprocket, left and right supports whose top ends are vertically installed on the bottom of the truss to be spaced apart from the axially fixed position of the main sprocket at the same interval respectively, left and right guide sprockets axially installed at lower portions of the supports to be located at lower left and right positions than the main sprocket on which the left and right parts are hung downward, and cultivation gutters respectively ascending and descending in a state of being coupled to the left and right parts of the chain.

Normally, a plurality of cultivation gutters is hung on the same horizontal line at the same height from the ground at regular intervals. When a passage of workers is required during seeding, cultivation work, or harvest, the plurality of elevating units raise and lower the left and right cultivation gutters alternately one by one by the operation of the driving unit to form a passage of workers between the raised cultivation gutters. Thus, the entire area of the greenhouse may be used as a cultivation area, so that the productivity may be double.

However, in order to raise and lower the left and right cultivation gutters alternately one by one by operating the plurality of elevating units using one driving unit, the plant cultivation apparatus of the conventional earlier application includes the driving shat rotatably installed by the motor, the plurality of driven shafts installed perpendicular to the drive shaft, and the plurality of worm gear reducers respectively installed at intersections of the drive shaft and the driven shafts and configured to simultaneously rotate the driven shafts by transferring a decelerated rotational force of the drive shaft thereto. Since the structure of operating a plurality of elevating members by transferring a driving force of the motor is complicated, a large number of parts are required, and installation time increases, installation and maintenance are very difficult and troublesome. Also, the cost burden of producers and customers cannot be reduced since there is a limit to lowering production costs because of rising costs for installation and maintenance and repair.

Another system that enables plants to be cultivated in the entire area of a greenhouse is described in EP 2 912 937 A1.

### [DETAILED DESCRIPTION OF THE INVENTION]

### [Technical Problem]

Accordingly, the present invention is made in an effort to resolve the problems of the conventional art. It is an object of the present invention to provide a plant cultivation apparatus using an up-down system which enables installation and maintenance to be very simple and easy, while greatly reducing the cost burden of producers and consumers.

### [Technical Solution]

In order to achieve the above objects, the present invention provides a plant cultivation apparatus using an up-down system according to independent claim 1, including: a driving unit 20 installed at trusses 12 installed at regular intervals in a forward and backward direction to horizontally cross tops of inner pillars 11 of a greenhouse 10, an elevating unit 30 installed to operate by the driving unit 20, and left and right cultivation gutters 40 and 40' configured to ascend and descend by the elevating unit 30; wherein the driving unit 20 comprises a deceleration motor 21, a drive shaft 22 axially installed on the bottoms of middle crossbars 121 of the trusses 12 to cross the middle crossbars 121 in the forward and backward direction and rotating by the deceleration motor 21, driving sprocket members 23 each configured with a set of five sprockets of first to fifth sprockets 231 to 235 and axially installed at the drive shaft 22 at regular intervals in the forward and backward direction, and first to fourth left and right auxiliary sprockets 241 to 244 installed to be adjacent to left and right sides of the second to fifth sprockets 232 to 235 respectively; the elevating unit 30 is configured with a set of five elevating members of first to fifth elevating members 31 to 35; the first elevating member 31 comprises first left and right guide sprockets 321 installed on the top of the middle crossbar 121 of the truss 12 to be located at upper positions than the drive shaft 22 and spaced apart from left and right sides of the drive shaft 22 at the same interval respectively and a first elevating chain 311 having a middle part interlocking with a bottom portion of the first sprocket 231, left and right parts interlocking with top portions of the first left and right guide sprockets 321 and directed downward from left and right sides of the top portions thereof respectively, and left and right ends to which cultivation gutters 40 and 40' are coupled respectively;
the second elevating member 32 comprises second left and right guide sprockets 322 installed on the top of a lower crossbar 122 of the truss 12 to be located at lower positions than the first left and right guide sprockets 321 and spaced apart from left and right sides thereof at the same interval respectively and a second elevating chain 312 having a middle part interlocking with a top portion of the second sprocket 232, left and right parts interlocking with bottom portions of the first left and right auxiliary sprockets and top portions of the second left and right guide sprockets 322 and directed downward from left and right sides of the top portions of the second left and right guide sprockets 322 respectively, and left and right ends to which cultivation gutters 40 and 40' are coupled respectively; the third elevating member 33 comprises third left and right guide sprockets 323 installed on the top of the middle crossbar 121 to be located at upper positions than the second left and right guide sprockets 322 and spaced apart from left and right sides thereof at the same interval respectively and a third elevating chain 313 having a middle part interlocking with a bottom portion of the third sprocket 233, left and right parts interlocking with top portions of the second left and right auxiliary sprockets 242 and top portions of the third left and right guide sprockets 323 and directed downward from left and right sides of the top portions of the third left and right guide sprockets 323 respectively, and left and right ends to which cultivation gutters 40 and 40' are coupled respectively; the fourth elevating member 34 comprises fourth left and right guide sprockets 324 installed on the top of the lower crossbar 122 to be located at lower positions than the third left and right guide sprockets 323 and spaced apart from left and right sides thereof at the same interval respectively and a fourth elevating chain 314 having a middle part interlocking with a top portion of the fourth sprocket 234, left and right parts interlocking with bottom portions of the third left and right auxiliary sprockets 243 and top portions of the fourth left and right guide sprockets 324 and directed downward from left and right sides of the top portions of the fourth left and right guide sprockets 324 respectively, and left and right ends to which cultivation gutters 40 and 40' are coupled respectively; and the fifth elevating member 35 comprises fifth left and right guide sprockets 325 installed on the top of the middle crossbar 121 to be located at upper positions than the fourth left and right guide sprockets 324 and spaced apart from left and right sides thereof at the same interval respectively and a fifth elevating chain 315 having a middle part interlocking with a bottom portion of the fifth sprocket 235, left and right parts interlocking with top portions of the fourth left and right auxiliary sprockets 244 and top portions of the fifth left and right guide sprockets 325 and directed downward from left and right sides of the top portions of the fifth left and right guide sprockets 325 respectively, and left and right ends to which cultivation gutters 40 and 40' are coupled respectively, wherein the left and right cultivation gutters 40 and 40' of the first to fifth elevating members 31 to 35 ascend and descend alternately in turn in a zigzag shape by using one deceleration motor 21 and one drive shaft 22.

### [ADVANTAGEOUS EFFECTS]

The plant cultivation apparatus using an up-down system according to the present invention is configured to simultaneously and directly transfer a driving force of one deceleration motor to a plurality of elevating members via one drive shaft. Thus, there is an advantage that the structure is simplified and installation and maintenance are very simple and easy. In addition, the cost burden of producers and consumers may be reduced by inhibiting an increase in production costs due to a considerable reduction in related costs.

### [BRIEF DESCRIPTION OF DRAWINGS]

FIG. 1 is a schematic front view illustrating a portion of a greenhouse in which a plant cultivation apparatus using an up-down system according to an embodiment of the present invention is installed.
FIG. 2 is a plan view illustrating the plant cultivation apparatus using the up-down system of FIG. 1 from which some elements are omitted.
FIG. 3 is a front view illustrating an extracted and enlarged state of a portion in FIG. 1.
FIGS. 4A and 4B are enlarged plan and side views of FIG. 3.
FIGS. 5A and 5B are front and plan views illustrating a partially extracted and enlarged state of a first elevating member in FIG. 3.
FIGS. 6A and 6B are front and plan views illustrating a partially extracted and enlarged state of second and third elevating members in FIG. 3.
FIGS. 7A and 8B are font and plan views illustrating a partially extracted and enlarged state of fourth and fifth elevating members in FIG. 3.
FIGS. 8A and 8B are front views illustrating a state where heights of cultivation gutters in FIG. 1 are differently adjusted.

### [DETAILED DESCRIPTION OF THE EMBODIMENTS]

Hereinafter, a plant cultivation apparatus using an up-down system according to an embodiment of the present invention will be described in more detail with reference to the accompanying drawings.

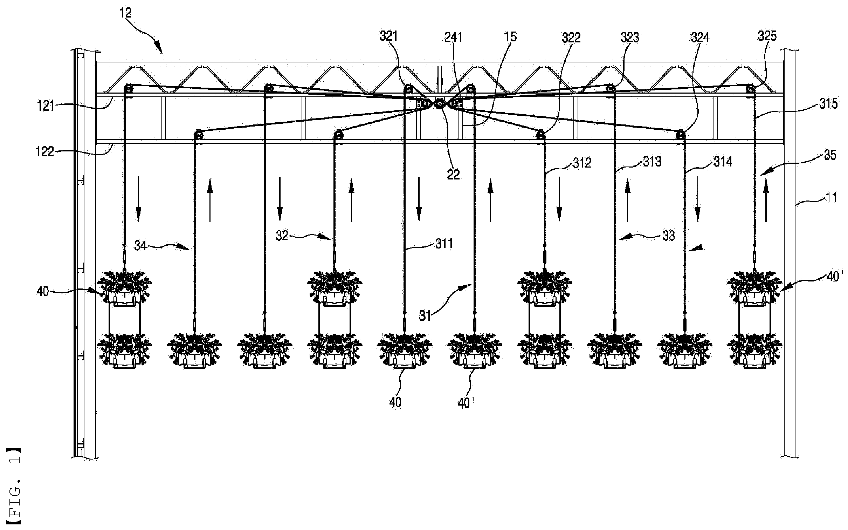

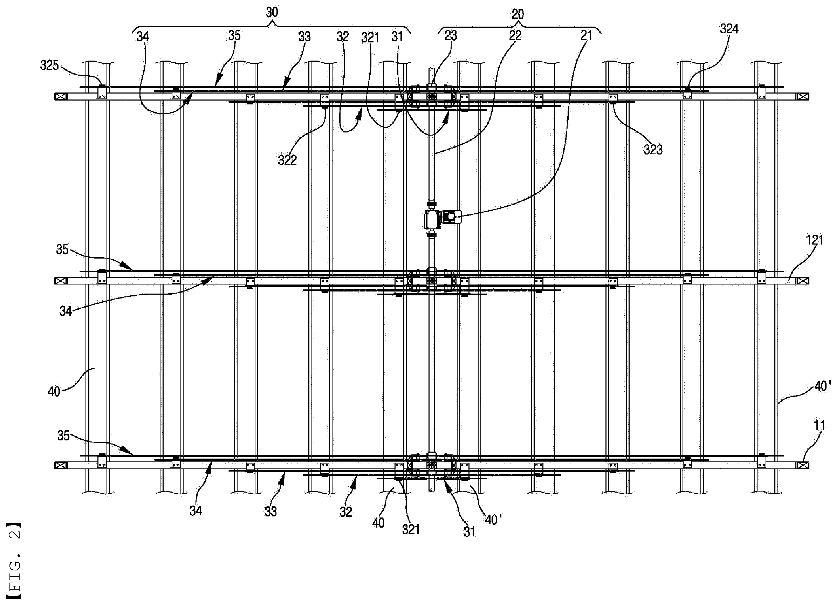

FIG. 1 is a schematic front view illustrating a portion of a greenhouse in which a plant cultivation apparatus using an up-down system according to an exemplary embodiment of the present invention is installed. FIG. 2 is a plan view illustrating the plant cultivation apparatus using the up-down system in which a portion of FIG. 1 is omitted.

The plant cultivation apparatus using the up-down system according to the present invention illustrated in FIGS. 1 and 2 includes a driving unit 20 installed at trusses 12 installed at regular intervals in a forward and backward direction to horizontally cross tops of pillars 11 of a greenhouse 10 having a general roof structure widely used in the art, an elevating unit 30 installed to ascend and descend by the driving unit, and cultivation gutters 40 and 40' respectively hanging from left and right parts of the elevating unit 30.

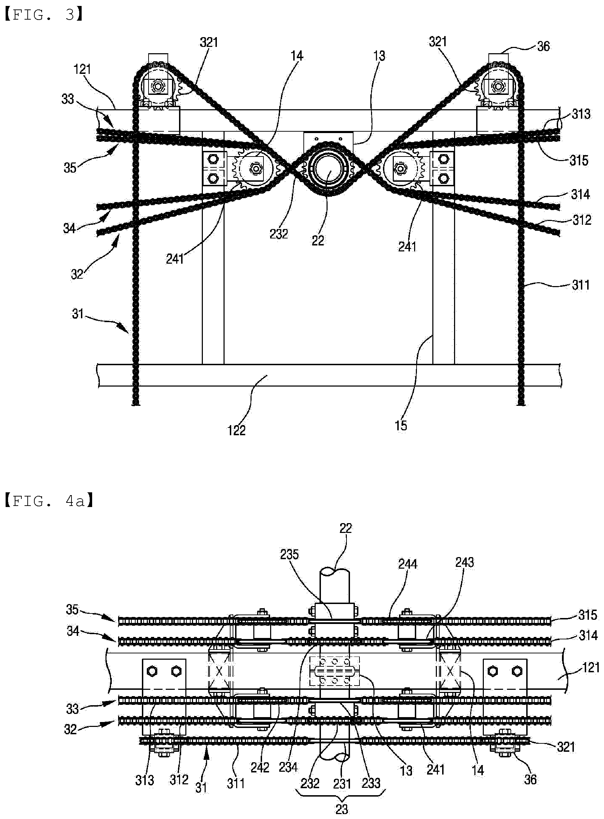

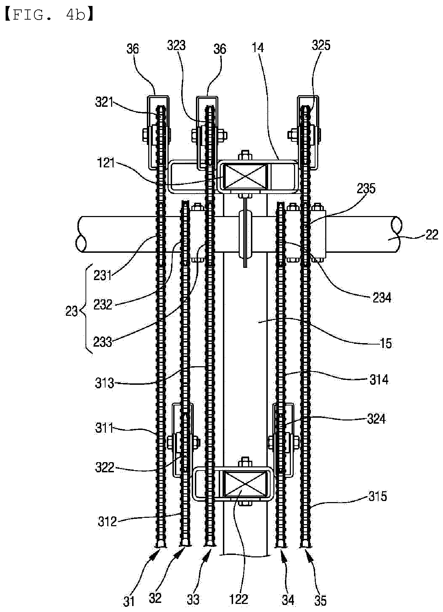

FIG. 3 is a front view illustrating an extracted and enlarged state of a portion in FIG. 1. FIGS. 4A and 4B are enlarged plan and side views of FIG. 3.

The driving unit 20 may include a deceleration motor 21, a drive shaft 22 installed on the bottoms of middle crossbars 121 of the trusses 12 with a bearing to cross the middle crossbars 121 in the forward and backward direction and rotating forward and backward by the deceleration motor, driving sprocket members 23 axially installed at the drive shaft at regular intervals in the forward and backward direction, and first to fourth left and right auxiliary sprockets 241 to 244 respectively installed to be adjacent to left and right sides of the second to fifth sprockets.

The driving sprocket member 23 is configured with a set of five sprockets of first to fifth sprockets 231 to 235. The first to fifth sprockets may be formed separately or groups of two or three sprockets may be axially fixed to portions corresponding to the drive shaft 22.

When the first to fifth sprockets 231 to 235 are axially fixed to the drive shaft 22, the predetermined positions of the drive shaft crossing the middle crossbars 121 may be distributed in front of and behind the bearing 13 axially installed at the middle crossbar.

In this way, loads of the cultivation gutters 40 and 40' respectively coupled to the first to fifth sprockets 231 to 235 are not concentrated on the drive shaft 22 but distributed by the bearing 13, which will be described later, and thus shaft deformation or the like does not occur even after long-term use.

Also, the first and second left and right auxiliary sprockets 241 and 242 are axially installed at left and right sides of the second and third sprockets 232 and 233 and the third and fourth left and right auxiliary sprockets 243 and 244 are axially installed at left and right sides of the fourth and fifth sprockets 234 and 235 respectively in front of or behind the left and right bearing brackets 14 to be located on the same line and spaced apart from each other at the same interval.

The elevating unit 30 includes first to fifth elevating members 31 to 35.

The first to fifth elevating members 31 to 35 include the first to fifth elevating chains 311 to 315 having middle parts interlocking with top or bottom portions of the first to fifth sprockets 231 to 235 and left and right ends to which cultivation gutters 40 and 40' are coupled respectively, and the first to fifth left and right guide sprockets 321 to 325 on which left and right parts of the first to fifth elevating chains are hung downward respectively.

The first left and right guide sprockets 321 are installed on the top of the middle crossbar 121 to be located at upper positions than the drive shaft 22 and spaced apart from left and right sides of the drive shaft 22 at the same interval respectively. The second left and right guide sprockets 322 are installed on the top of a lower crossbar 122 to be located at lower positions than the first left and right guide sprockets 321 and spaced apart from left and right sides of the first left and right guide sprockets 321 at the same internal respectively. The third left and right guide sprockets 323 are installed on the top of the middle crossbar 121 to be located at upper positions than the second left and right guide sprockets 322 and spaced apart from left and right sides of the second left and right guide sprockets 322 at the same internal respectively. The fourth left and right guide sprockets 324 are installed on the top of the lower crossbar 122 to be located at lower positions than the third left and right guide sprockets 323 and spaced apart from left and right sides of the third left and right guide sprockets 323 at the same internal respectively. The fifth left and right guide sprockets 325 are installed on the top of the middle crossbar 121 to be located at upper positions than the fourth left and right guide sprockets 324 and spaced apart from left and right sides of the fourth left and right guide sprockets 324 at the same internal respectively.

In this way, the first to fifth left and right guide sprockets 321 to 325 may be arranged at equal horizontal intervals, and thus the left and right cultivation gutters 40 and 40' coupled to the left and right ends of the first to fifth elevating chains may be maintained at equal intervals.

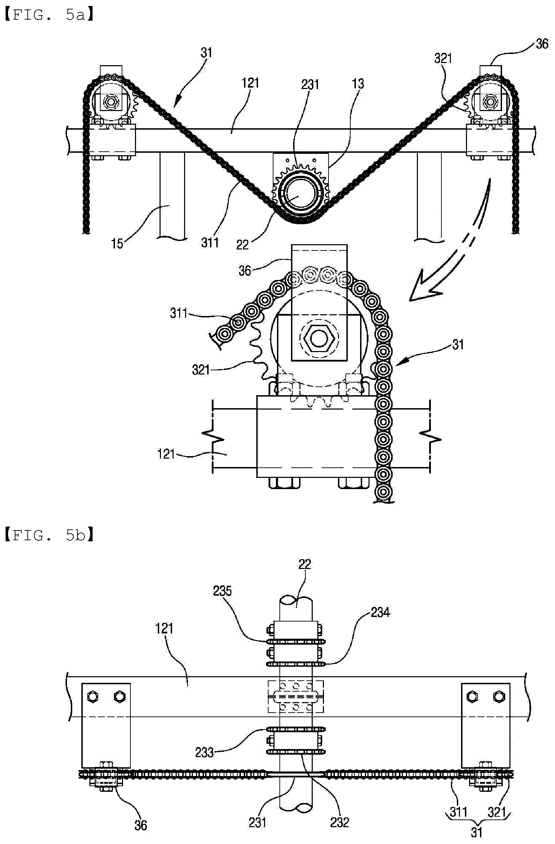

FIGS. 5A and 5B are front and plan views illustrating a partially extracted and enlarged state of a first elevating member in FIG. 3.

The first elevating chain 311 of the first elevating member 31 is installed such that the middle part interlocks with the bottom portion of the first sprocket 231 and the left and right parts are directed upward, interlock with the top portions of the first left and right guide sprockets, and are directed downward from left and right sides of the top portions thereof respectively.

In this way, when the deceleration motor 21 is driven forward and the first sprocket 231 rotates clockwise by the drive shaft 22, the middle part of the first elevating chain 311 moves to the left so that the right part ascends and the left part descends in accordance with guidance of the first left and right guide sprockets 321, and thus the left cultivation gutter 40 descends and the right cultivation gutter 40' ascends. On the contrary, when the deceleration motor is driven backward and the first sprocket rotates counterclockwise, the middle part of the first elevating chain moves to the right so that the right cultivation gutter descends and the left cultivation gutter ascends.

When the cultivation gutters 40 and 40' ascend and descend as described above, the first elevating chain 311 is held by more teeth of the bottom portion of the first sprocket and a lot of teeth of the top portions of the first left and right guide sprockets due to a greater height difference between the first sprocket 231 and the first left and right guide sprockets 321. Thus, a driving force of the drive shaft 22 is entirely transferred thereto enabling the left and right cultivation gutters to ascend and descend smoothly and accurately without any deviation.

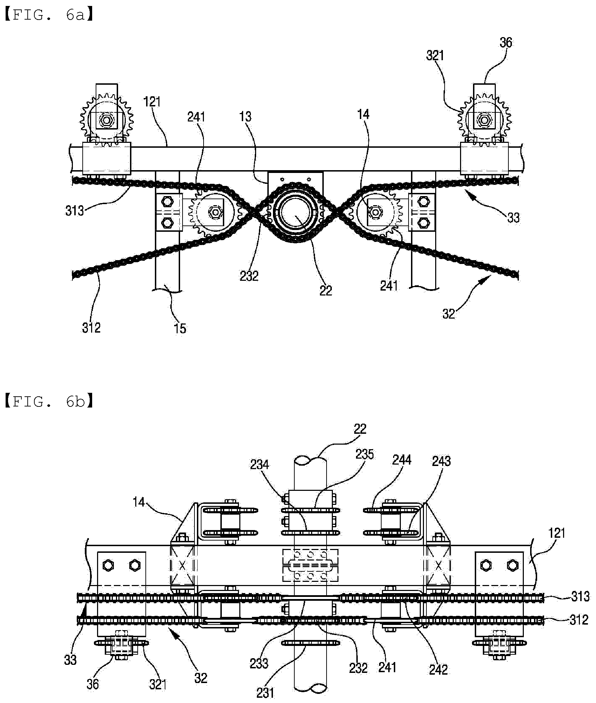

FIGS. 6A and 6B are front and plan views illustrating a partially extracted and enlarged state of second and third elevating members in FIG. 3.

The second elevating chain 312 of the second elevating member 32 is installed such that the middle part interlocks with the top portion of the second sprocket 232 and the left and right are directed downward, interlock with the bottom portions of the first left and right auxiliary sprockets 241, interlock with the top portions of the second left and right guide sprockets 322, and are directed downward from left and right sides thereof respectively.

In this way, when the deceleration motor 21 is driven forward and the second sprocket 232 rotates clockwise by the drive shaft 22, the middle part of the second elevating chain 312 moves to the right so that the left part ascends and the right part descends in accordance with guidance of the first left and right auxiliary sprockets 241 and the second left and right guide sprockets 322, and thus the left cultivation gutter 40 ascends and the right cultivation gutter 40' descends. On the contrary, when the deceleration motor is driven backward and the second sprocket rotates counterclockwise, the middle part of the second elevating chain moves to the left so that the right cultivation gutter ascends and the left cultivation gutter descends

When the cultivation gutters 40 and 40' ascend and descend as described above, the second elevating chain 312 moves in a state of being securely held by teeth of the top portion of the second sprocket 232, the bottom portions of the first left and right auxiliary sprockets 241, and the top portions of the second left and right guide sprockets 322 in spite of less height differences among the second sprocket 232, the first left and right auxiliary sprockets 241, and the second left and right guide sprockets 322 since the held portions are alternated between the top portions and the bottom portions. Thus, the driving force of the drive shaft 22 is entirely transferred thereto enabling the left and right cultivation gutters to ascend and descend smoothly and accurately without any deviation.

Meanwhile, the third elevating chain 313 of the third elevating member 33 is installed such that the middle part interlocks with the bottom portion of the third sprocket 233 and the left and right parts are directed upward, interlock with the top portions of the second left and right auxiliary sprockets 242, and are directed downward from left and right sides of the top portions of the third left and right guide sprockets 323 respectively.

In this way, when the deceleration motor 21 is driven forward and the third sprocket 233 rotates clockwise by the drive shaft 22, the middle part of the third elevating chain 313 moves to the left so that the left part descends and the right part ascends in accordance with guidance of the second left and right auxiliary sprockets 242 and the third left and right guide sprockets 323, and thus the left cultivation gutter 40 descends and the right cultivation gutter 40' ascends. On the contrary, when the deceleration motor is driven backward and the third sprocket rotates counterclockwise, the middle part of the third elevating chain moves to the right so that the right cultivation gutter descends and the left cultivation gutter ascends.

When the cultivation gutters 40 and 40' ascend and descend as described above, the third elevating chain 313 moves in a state of being securely held by teeth of the bottom portion of the third sprocket 233, the top portions of the second left and right auxiliary sprockets 242, and the top portions of the third left and right guide sprockets 323 in spite of less height differences among the third sprocket 233, the second left and right auxiliary sprockets 242, and the third left and right guide sprockets 323 since the held portions are alternated between the top portions and the bottom portions. Thus, the driving force of the drive shaft 22 is entirely transferred thereto enabling the left and right cultivation gutters to ascend and descend smoothly and accurately without any deviation.

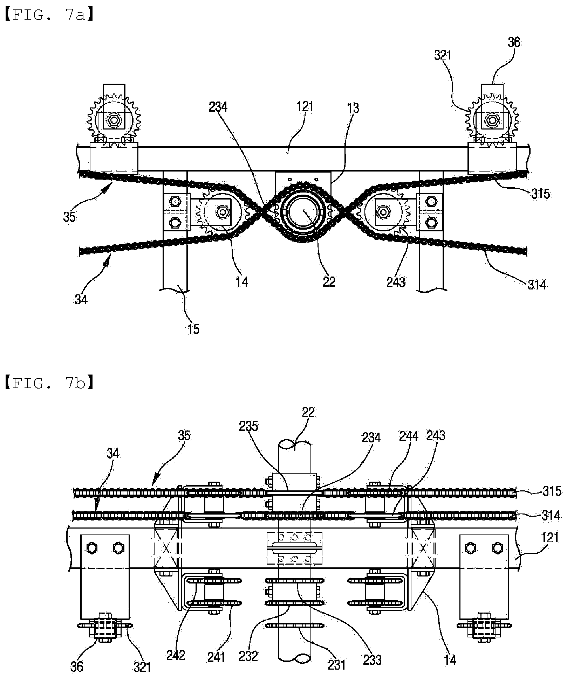

FIGS. 7A and 7B are font and plan views illustrating a partially extracted and enlarged state of fourth and fifth elevating members in FIG. 3.

The fourth elevating chain 314 of the fourth elevating member 34 is installed such that the middle part interlocks with the top portion of the fourth sprocket 234 and the left and right parts are directed downward, interlock with the bottom portions of the third left and right auxiliary sprockets 243, interlock with the top portions of the fourth left and right guide sprockets 324, and are directed downward from left and right sides thereof respectively.

In this way, when the deceleration motor 21 is driven forward and the fourth sprocket 234 rotates clockwise by the drive shaft 22, the middle part of the fourth elevating chain 314 moves to the right so that the left part ascends and the right part descends in accordance with guidance of the third left and right auxiliary sprockets 243 and the fourth left and right guide sprockets 324, and thus the left cultivation gutter 40 ascends and the right cultivation gutter 40' descends. On the contrary, when the deceleration motor is driven backward and the fourth sprocket rotates counterclockwise, the middle part of the fourth elevating chain moves to the left so that the right cultivation gutter ascends and the left cultivation gutter descends.

When the cultivation gutters 40 and 40' ascend and descend as described above, the fourth elevating chain 314 moves in a state of being securely held by teeth of the top portion of the fourth sprocket 234, the bottom portions of the third left and right auxiliary sprockets 243, and the top portions of the fourth left and right guide sprockets 324 in spite of less height differences among the fourth sprocket 234, the third left and right auxiliary sprockets 243, and the fourth left and right guide sprockets 324 since the held portions are alternated between the top portions and the bottom portions. Thus, the driving force of the drive shaft 22 is entirely transferred thereto enabling the left and right cultivation gutters to ascend and descend smoothly and accurately without any deviation.

Meanwhile, the fifth elevating chain 315 of the fifth elevating member 35 is installed such that the middle part interlocks with the bottom portion of the fifth sprocket 235 and the left and right parts are directed upward, interlock with the top portions of the fourth left and right auxiliary sprockets 244 and top portions of the fifth left and right guide sprockets 325, and are directed downward from left and right sides of the top portions thereof respectively.

In this way, when the deceleration motor 21 is driven forward and the fifth sprocket 235 rotates clockwise by the drive shaft 22, the middle part of the fifth elevating chain 315 moves to the left so that the left part descends and the right part ascends in accordance with guidance of the fourth left and right auxiliary sprockets 244 and the fifth left and right guide sprockets 325, and thus the left cultivation gutter 40 descends and the right cultivation gutter 40' ascends. On the contrary, when the deceleration motor is driven backward and the fifth sprocket rotates counterclockwise, the middle part of the fifth elevating chain moves to the right so that the right cultivation gutter descends and the left cultivation gutter ascends.

When the cultivation gutters 40 and 40' ascend and descend as described above, the fifth elevating chain 315 moves in a state of being securely held by teeth of the bottom portion of the fifth sprocket 235, the top portions of the fourth left and right auxiliary sprockets 244, and the top portions of the fifth left and right guide sprockets 325 in spite of less height differences among the fifth sprocket 235, the fourth left and right auxiliary sprockets 244, and the fifth left and right guide sprockets 325 since the held portions are alternated between the top portions and the bottom portions. Thus, the driving force of the drive shaft 22 is entirely transferred thereto enabling the left and right cultivation gutters to ascend and descend smoothly and accurately without any deviation.

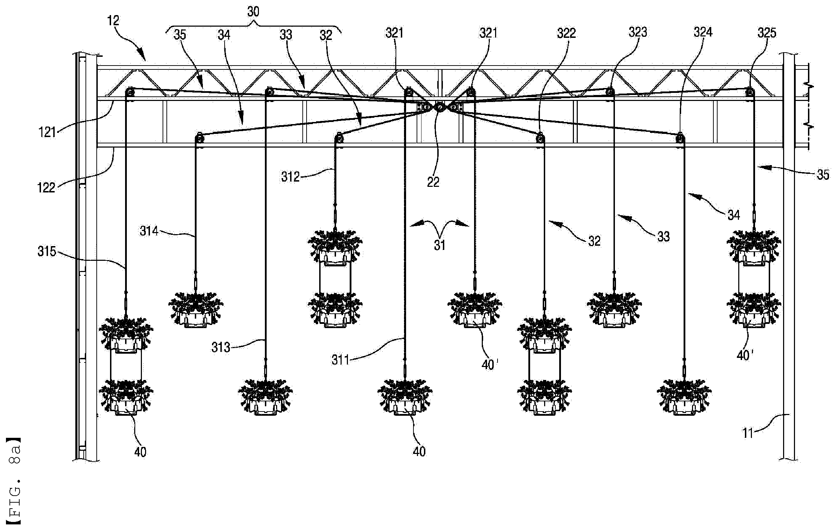

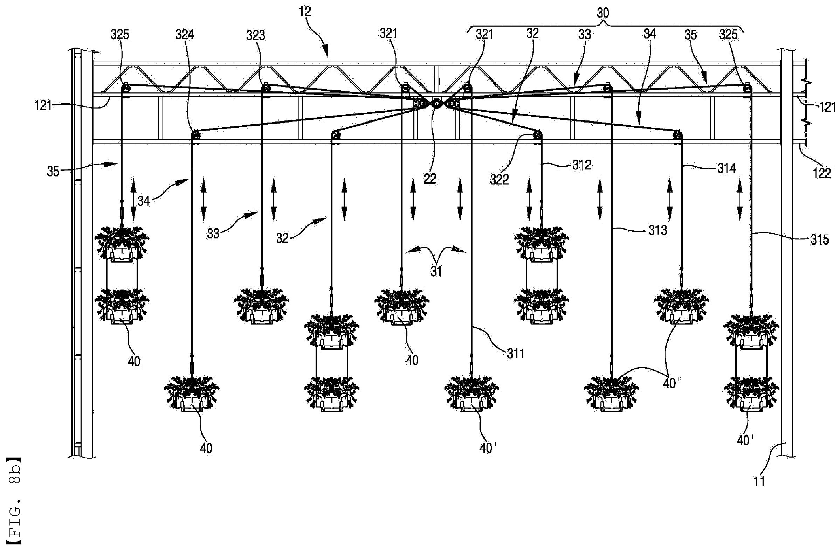

FIGS. 8A and 8B are front views illustrating a state where heights of cultivation gutters in FIG. 1 are differently adjusted9.

When the first to fifth sprockets 231 to 235 simultaneously rotate clockwise by the drive shaft 22 in response to the forward driving of the deceleration motor 21 in a state where the left and right cultivation gutters 40 and 40' of the first to fifth elevating members 31 to 35 are positioned on the same horizontal line at the same height as illustrated in FIG. 9, the middle parts of the first, third, and fifth elevating chains 311, 313, and 315 move to the left simultaneously and the second and fourth elevating chains 312 and 314 move to the right simultaneously.

In this case, the left cultivation gutters 40 respectively coupled to the left ends of the first, third, and fifth elevating chains 311, 313, and 315 descend simultaneously and the right cultivation gutters 40' respectively coupled to the right ends thereof ascend simultaneously, while the left cultivation gutters 40 respectively coupled to the left ends of the second and fourth elevating chains 312 and 314 ascend simultaneously and the right cultivation gutters 40' respectively coupled to the right ends thereof descend simultaneously. Thus, the left and right cultivation gutters ascend and descend alternately in turn in the zigzag shape by using only one deceleration motor 21 and one drive shaft 22 to form a passage for workers as illustrated in FIG. 8A.

Also, when the first to fifth sprockets 231 to 235 simultaneously rotate counterclockwise by the drive shaft 22 in response to the backward driving of the deceleration motor 21 in a state where the left and right cultivation gutters 40 and 40' of the first to fifth elevating members 31 to 35 are positioned on the same horizontal line at the same height as illustrated in FIG. 9, the middle parts of the first, third, and fifth elevating chains 311, 313, and 315 move to the right simultaneously and the second and fourth elevating chains 312 and 314 move to the left simultaneously. Thus, the left cultivation gutters respectively coupled to the left ends of the first, third, and fifth elevating chains ascend simultaneously and the right cultivation gutters respectively coupled to the right ends thereof descend simultaneously, while the left cultivation gutters respectively coupled to the left ends of the second and fourth elevating chains descend simultaneously and the right cultivation gutters respectively coupled to the right ends thereof ascend simultaneously as illustrated in FIG. 8B. Thus, the left and right cultivation gutters ascend and descend alternately in turn in the zigzag shape by using only one deceleration motor 21 and one drive shaft 22 to form a passage for workers.

Meanwhile, although it has been described that the elevating unit 30 is configured with a set of five sprockets, i.e., first to fifth elevating members 31 to 35, the present invention is not limited thereto. The elevating units each configured with a set of three, four, or more elevating members may also be continuously aligned horizontally or vertically in accordance of widthwise and lengthwise areas of the inside of the greenhouse 10 in which the elevating units will be installed. It is obvious that such modifications are included within the scope of the invention.

Also, the first to fifth left and right guide sprockets 321 to 325 may be axially installed inside anti-dislocation brackets 36 having open left and right sides and configured to prevent the first to fifth elevating chains 311 to 315 interlocking with the first to fifth left and right guide sprockets from being dislocated from moving paths thereof.

The plant cultivation apparatuses using the up-down system according to the exemplary embodiments of the present invention are configured such that the first elevating chain 311 to the fifth elevating chain 315 simultaneously directed upward and downward alternately in turn toward upper positions and lower positions than the drive shaft 22 in a zigzag shape. Thus, the plant cultivation apparatus using the up-down system according to the present invention has a simple structure and may be installed and maintained with lower costs, thereby reducing production costs resulting in decrease in cost burden of producers and consumers.

## Claims

1. A plant cultivation apparatus using an up-down system comprising a driving unit (20) installed at trusses (12) installed at regular intervals in a forward and backward direction to horizontally cross tops of inner pillars (11) of a greenhouse (10), an elevating unit (30) installed to be operated by the driving unit (20), and left and right cultivation gutters (40 and 40') configured to be ascended and descended by the elevating unit (30),
wherein the driving unit (20) comprises a deceleration motor (21), a drive shaft (22) axially installed on the bottoms of middle crossbars (121) of the trusses (12) to cross the middle crossbars (121) in the forward and backward direction and being rotated by the deceleration motor (21), driving sprocket members (23) each configured with a set of five sprockets of first to fifth sprockets (231 to 235) and axially installed at the drive shaft (22) at regular intervals in the forward and backward direction, and first to fourth left and right auxiliary sprockets (241 to 244) installed to be adjacent to left and right sides of the second to fifth sprockets (232 to 235) respectively;
the elevating unit (30) is configured with a set of five elevating members of first to fifth elevating members (31 to 35);
the first elevating member (31) comprises first left and right guide sprockets (321) installed on the top of the middle crossbar (121) of the truss (12) to be located at upper positions than the drive shaft (22) and spaced apart from left and right sides of the drive shaft (22) at the same interval respectively and a first elevating chain (311) having a middle part interlocking with a bottom portion of the first sprocket (231), left and right parts interlocking with top portions of the first left and right guide sprockets (321) and directed downward from left and right sides of the top portions thereof respectively, and left and right ends to which cultivation gutters (40 and 40') are coupled respectively;
the second elevating member (32) comprises second left and right guide sprockets (322) installed on the top of a lower crossbar (122) of the truss (12) to be located at lower positions than the first left and right guide sprockets (321) and spaced apart from left and right sides thereof at the same interval respectively and a second elevating chain (312) having a middle part interlocking with a top portion of the second sprocket (232), left and right parts interlocking with bottom portions of the first left and right auxiliary sprockets (241) and top portions of the second left and right guide sprockets (322) and directed downward from left and right sides of the top portions of the second left and right guide sprockets (322) respectively, and left and right ends to which cultivation gutters (40 and 40') are coupled respectively;
the third elevating member 33 comprises third left and right guide sprockets (323) installed on the top of the middle crossbar (121) to be located at upper positions than the second left and right guide sprockets (322) and spaced apart from left and right sides thereof at the same interval respectively and a third elevating chain (313) having a middle part interlocking with a bottom portion of the third sprocket (233), left and right parts interlocking with top portions of the second left and right auxiliary sprockets (242) and top portions of the third left and right guide sprockets (323) and directed downward from left and right sides of the top portions of the third left and right guide sprockets (323) respectively, and left and right ends to which cultivation gutters (40 and 40') are coupled respectively;
the fourth elevating member (34) comprises fourth left and right guide sprockets (324) installed on the top of the lower crossbar (122) to be located at lower positions than the third left and right guide sprockets (323) and spaced apart from left and right sides thereof at the same interval respectively and a fourth elevating chain (314) having a middle part interlocking with a top portion of the fourth sprocket (234), left and right parts interlocking with bottom portions of the third left and right auxiliary sprockets (243) and top portions of the fourth left and right guide sprockets (324) and directed downward from left and right sides of the top portions of the fourth left and right guide sprockets (324) respectively, and left and right ends to which cultivation gutters (40 and 40') are coupled respectively; and
the fifth elevating member (35) comprises fifth left and right guide sprockets (325) installed on the top of the middle crossbar (121) to be located at upper positions than the fourth left and right guide sprockets (324) and spaced apart from left and right sides thereof at the same interval respectively and a fifth elevating chain (315) having a middle part interlocking with a bottom portion of the fifth sprocket (235), left and right parts interlocking with top portions of the fourth left and right auxiliary sprockets (244) and top portions of the fifth left and right guide sprockets (325) and directed downward from left and right sides of the top portions of the fifth left and right guide sprockets (325) respectively, and left and right ends to which cultivation gutters (40 and 40') are coupled respectively,
wherein the left and right cultivation gutters (40 and 40') of the first to fifth elevating members (31 to 35) ascend and descend alternately in turn in a zigzag shape by using the deceleration motor (21) and the drive shaft (22).

2. The plant cultivation apparatus according to claim 1, wherein the first to fifth sprockets (231 to 235) are formed separately or divided into one group of two sprockets and the other group of three sprockets.

3. The plant cultivation apparatus according to claim 1, wherein the first to fifth elevating chains (311 to 315) are configured to be simultaneously directed upward and downward alternately in turn toward upper positions and lower positions than the drive shaft (22) in a zigzag shape.

4. The plant cultivation apparatus according to claim 1, wherein the first to fifth elevating members (31 to 35) further comprise anti-dislocation brackets (36) in which the first to fifth left and right guide sprockets (321 to 325) are installed to prevent the first to fifth elevating chains (311 to 315) from being dislocated from moving paths thereof.

## Patentansprüche

1. Pflanzenanbauvorrichtung mit einem Auf/Ab-System, umfassend
eine Antriebseinheit (20), die an Trägern (12) installiert ist, die in regelmäßigen Abständen in Vorwärts- und Rückwärtsrichtung installiert sind, um die oberen Enden von inneren Säulen (11) eines Gewächshauses (10) horizontal zu kreuzen,
eine Hebeeinheit (30), die installiert ist, um von der Antriebseinheit (20) betrieben zu werden, und
linke und rechte Kulturrinnen (40 und 40'), die konfiguriert sind, um von der Hebeeinheit (30) auf- und abbewegt zu werden,
wobei die Antriebseinheit (20) umfasst:
einen Verzögerungsmotor (21),
eine Antriebswelle (22), die axial auf den Unterseiten von mittleren Querstangen (121) der Traversen (12) installiert ist, um die mittleren Querstangen (121) in Vorwärts- und Rückwärtsrichtung zu kreuzen, und die von dem Verzögerungsmotor (21) gedreht wird,
Antriebskettenradelemente (23), die jeweils mit einem Fünf-Kettenräder-Satz mit ersten bis fünften Kettenrädern (231 bis 235) konfiguriert sind und axial in regelmäßigen Abständen in Vorwärts- und Rückwärtsrichtung an der Antriebswelle (22) installiert sind, und
erste bis vierte linke und rechte Hilfs-Kettenräder (241 bis 244), die so installiert sind, dass sie jeweils an die linke und rechte Seite der zweiten bis fünften Kettenräder (232 bis 235) angrenzen;
wobei die Hebeeinheit (30) mit einem Fünf-Hebeelemente-Satz von ersten bis fünften Hebeelementen (31 bis 35) konfiguriert ist;
wobei das erste Hebeelement (31) umfasst:
erste linke und rechte Führungskettenräder (321), die auf der Oberseite der mittleren Querstange (121) des Trägers (12) installiert sind, um in höheren Positionen als die Antriebswelle (22) angeordnet zu sein, und die links und rechts von der Antriebswelle (22) in jeweils gleichem Abstand von dieser angeordnet sind, und
eine erste Hebekette 311 mit einem Mittelteil, das mit einem unteren Abschnitt des ersten Kettenrads (231) ineinander greift, linken und rechten Teilen, die mit oberen Abschnitten der ersten linken und rechten Führungskettenräder (321) ineinandergreifen und von linken und rechten Seiten der oberen Abschnitte derselben nach unten gerichtet sind, sowie mit linken und rechten Enden, an die jeweils die Anbaurinnen (40 und 40') gekoppelt sind;
wobei das zweite Hebeelement (32) umfasst:
zweite linke und rechte Führungskettenräder (322), die auf der Oberseite einer unteren Querstange (122) des Trägers (12) installiert sind, um in tieferen Positionen als das erste linke und rechte Führungskettenrad (321) angeordnet zu sein, und die links und rechts von diesen in jeweils gleichem Abstand von diesen angeordnet sind, und
eine zweite Hebekette (312) mit einem Mittelteil, das mit einem oberen Abschnitt des zweiten Kettenrads (232) ineinander greift, linken und rechten Teilen, die mit unteren Abschnitten der ersten linken und rechten Hilfskettenräder (241) und oberen Abschnitten des zweiten linken und rechten Führungskettenrads (322) ineinandergreifen und von linken und rechten Seiten der oberen Abschnitte der zweiten linken und rechten Führungskettenräder (322) nach unten gerichtet sind, sowie mit linken und rechten Enden, an die jeweils Anbaurinnen (40 und 40') gekoppelt sind;
wobei das dritte Hebeelement (33) umfasst:
dritte linke und rechte Führungskettenräder (323), die auf der Oberseite der mittleren Querstange (121) installiert sind, um in höheren Positionen als das zweite linke und rechte Führungskettenrad (322) angeordnet zu sein, und die links und rechts von diesen in jeweils gleichem Abstand von diesen angeordnet sind, und
eine dritte Hebekette (313) mit einem Mittelteil, das mit einem unteren Abschnitt des dritten Kettenrads (233) ineinander greift, linken und rechten Teilen, die mit oberen Abschnitten der zweiten linken und rechten Hilfskettenräder (242) und oberen Abschnitten des dritten linken und rechten Führungskettenrads (323) ineinandergreifen und von linken und rechten Seiten der oberen Abschnitte der dritten linken und rechten Führungskettenräder (323) nach unten gerichtet sind, sowie mit linken und rechten Enden, an die jeweils Anbaurinnen (40 und 40') gekoppelt sind;
wobei das vierte Hebeelement (34) umfasst:
vierte linke und rechte Führungskettenräder (324), die auf der Oberseite der unteren Querstange (122) installiert sind, um in niedrigeren Positionen als das dritte linke und rechte Führungskettenrad (322) angeordnet zu sein, und die links und rechts von diesen in jeweils gleichem Abstand von diesen angeordnet sind, und
eine vierte Hebekette (313) mit einem Mittelteil, das mit einem oberen Abschnitt des vierten Kettenrads (233) ineinander greift, linken und rechten Teilen, die mit unteren Abschnitten der dritten linken und rechten Hilfskettenräder (243) und oberen Abschnitten des vierten linken und rechten Führungskettenrads (324) ineinandergreifen und von linken und rechten Seiten der oberen Abschnitte der vierten linken und rechten Führungskettenräder (324) nach unten gerichtet sind, sowie mit linken und rechten Enden, an die jeweils Anbaurinnen (40 und 40') gekoppelt sind; und
wobei das fünfte Hebeelement (35) umfasst:
fünfte linke und rechte Führungskettenräder (325), die auf der Oberseite der mittleren Querstange (121) installiert sind, um in höheren Positionen als das vierte linke und rechte Führungskettenrad (322) angeordnet zu sein, und die links und rechts von diesen in jeweils gleichem Abstand von diesen angeordnet sind, und
eine fünfte Hebekette (315) mit einem Mittelteil, das mit einem unteren Abschnitt des fünften Kettenrads (235) ineinander greift, linken und rechten Teilen, die mit oberen Abschnitten der vierten linken und rechten Hilfskettenräder (244) und oberen Abschnitten des fünften linken und rechten Führungskettenrads (325) ineinandergreifen und von linken und rechten Seiten der oberen Abschnitte der fünften linken und rechten Führungskettenräder (325) nach unten gerichtet sind, sowie mit linken und rechten Enden, an die jeweils Anbaurinnen (40 und 40') gekoppelt sind;
wobei die linken und rechten Kultivierungsrinnen (40 und 40') der ersten bis fünften Hubelemente (31 bis 35) unter Verwendung des Verzögerungsmotors (21) und der Antriebswelle (22) abwechselnd nacheinander in einer Zickzackform auf- und absteigen.

2. Pflanzenanbauvorrichtung nach Anspruch 1,
bei der die ersten bis fünften Kettenräder (231 bis 235) separat gebildet oder in eine Gruppe von zwei Kettenrädern und die andere Gruppe von drei Kettenrädern unterteilt sind.

3. Pflanzenanbauvorrichtung nach Anspruch 1,
bei der die ersten bis fünften Hebeketten (311 bis 315) konfiguriert sind, um in einer Zickzackform gleichzeitig abwechselnd nach oben und nach unten zu oberen Positionen und tieferen Positionen als der Antriebswelle (22) gerichtet zu sein.

4. Pflanzenanbauvorrichtung nach Anspruch 1,
bei der das erste bis fünfte Hebeelement (31 bis 35) ferner Anti-Versetzungsklammern (36) umfasst, in denen die ersten bis fünften linken und rechten Führungskettenräder (321 bis 325) installiert sind, um zu verhindern, dass die ersten bis fünften Hebeketten (311 bis 315) aus ihren Bewegungspfaden heraus versetzt werden.

## Revendications

1. Appareil de culture de plantes utilisant un système ascendant et descendant comprenant une unité d'entraînement (20) installée sur des poutres (12) installées à intervalles réguliers dans une direction avant et arrière pour croiser horizontalement le sommet de montants intérieurs (11) d'une serre (10), une unité ascenseur (30) installée pour être actionnée par l'unité d'entraînement (20) et des bacs (40 et 40') configurées pour être montées et descendues par l'unité ascenseur (30),
dans lequel l'unité d'entraînement (20) comprend un moteur de décélération (21), un arbre d'entraînement (22) installé axialement sur les dessous de traverses centrales (121) des poutres (12) pour traverser les traverses centrales (121) dans la direction avant et arrière et pour être mis en rotation par le moteur de décélération (21), des organes a pignons d'entraînement (23) configurés chacun avec un jeu de cinq pignons comprenant de premier a cinquième pignons (231 a 235) installés axialement sur l'arbre d'entraînement (22) a intervalles réguliers dans la direction avant et arrière, et des premier á quatrième pignons auxiliaires de côtés gauche et droit (241 á 244) montés pour être adjacents aux côtés gauche et droit du second á cinquième pignons (232 á 235), respectivement ;
l'unité ascenseur (30) est configurée avec un ensemble de cinq organes ascenseurs comprenant de premier à cinquième organes ascenseurs (31 à 35) ;
le premier organe ascenseur (31) comprenant de premiers pignons de guidage gauche et droit (321) installés sur le dessus de la traverse centrale (121) de la poutre (12) afin d'être situés à des positions supérieures à l'arbre moteur (22) et à distance égale des côtés gauche et droit, respectivement, de l'arbre moteur (22), et une première chaîne ascenseur 311 ayant une partie centrale s'engrenant avec une partie inférieure du premier pignon (231) et des parties gauche et droite s'engrenant avec des parties supérieures des premiers pignons de guidage gauche et droit (321) et étant dirigées vers le bas à partir des côtés gauche et droit des parties supérieures, respectivement, et des extrémités gauche et droite auxquelles sont accouplés respectivement des bacs de culture (40 et 40') ;
le deuxième organe ascenseur (32) comprenant de deuxièmes pignons de guidage gauche et droit (322) installés sur le dessus d'une traverse inférieure (122) de la poutre (12) afin d'être situés à des positions inférieures aux premiers pignons de guidage gauche et droit (321) et à distance égale des côtés gauche et droit, respectivement, de ceux-ci et, une deuxième chaîne ascenseur (312) ayant une partie centrale s'engrenant avec une partie supérieure du deuxième pignon (232) et des parties gauche et droite s'engrenant avec des parties inférieures des premiers pignons auxiliaires gauche et droit (241) et des parties supérieures des deuxièmes pignons de guidage gauche et droit (322) et étant dirigées vers le bas à partir des côtés gauche et droit des parties supérieures, respectivement, des deuxièmes pignons de guidage gauche et droit (322) et des extrémités gauche et droite auxquelles sont accouplés respectivement des bacs de culture (40 et 40') ;
le troisième organe ascenseur (33) comprenant de troisièmes pignons de guidage gauche et droit (323) installés sur le dessus de la traverse centrale (121) de la poutre (12) afin d'être situés à des positions supérieures aux deuxièmes pignons de guidage gauche et droit (322) et à distance égale des côtés gauche et droit, respectivement, de ceux-ci et une troisième chaîne ascenseur (313) ayant une partie centrale s'engrenant avec une partie inférieure du troisième pignon (233) et des parties gauche et droite s'engrenant avec des parties supérieures des deuxièmes pignons auxiliaires gauche et droit (242) et des parties supérieures des troisièmes pignons de guidage gauche et droit (323) et étant dirigées vers le bas à partir des côtés gauche et droit des parties supérieures, respectivement, des deuxièmes pignons de guidage gauche et droit (322) et des extrémités gauche et droite auxquelles sont accouplés respectivement des bacs de culture (40 et 40') ;
le quatrième organe ascenseur (34) comprenant de quatrièmes pignons de guidage gauche et droit (324) installés sur le dessus d'une traverse inférieure (122) de la poutre (12) afin d'être situés à des positions inférieures aux troisièmes pignons de guidage gauche et droit (323) et à distance égale des côtés gauche et droit, respectivement, de ceux-ci, et une quatrième chaîne ascenseur (314) ayant une partie centrale s'engrenant avec une partie supérieure du quatrième pignon (234) et des parties gauche et droite s'engrenant avec des parties inférieures des troisièmes pignons auxiliaires gauche et droit (243) et des parties supérieures des quatrièmes pignons de guidage gauche et droit (324) et étant dirigées vers le bas à partir des côtés gauche et droit des parties supérieures, respectivement, des quatrièmes pignons de guidage gauche et droit (324) et des extrémités gauche et droite auxquelles sont accouplés respectivement des bacs de culture (40 et 40') ;
le cinquième organe ascenseur (35) comprenant de cinquièmes pignons de guidage gauche et droit (325) installés sur le dessus de la traverse centrale (121) de la poutre (12) afin d'être situés à des positions supérieures aux quatrièmes pignons de guidage gauche et droit (324) et à distance égale des côtés gauche et droit, respectivement, de ceux-ci, et une cinquième chaîne ascenseur (315) ayant une partie centrale s'engrenant avec une partie inférieure du cinquième pignon (235) et des parties gauche et droite s'engrenant avec des parties supérieures des quatrièmes pignons auxiliaires gauche et droit (244) et des parties supérieures des cinquièmes pignons de guidage gauche et droit (325) et étant dirigées vers le bas à partir des côtés gauche et droit des parties supérieures, respectivement, des quatrièmes pignons de guidage gauche et droit (324) et des extrémités gauche et droite auxquelles sont accouplés respectivement des bacs de culture (40 et 40'),
dans lequel les bacs de culture gauches et droites (40 et 40') des premier à cinquième organes ascenseurs (31 à 35) montent et descendent alternativement en zigzag en utilisant le moteur de décélération (21) et l'arbre moteur (22).

2. L'appareil de culture de plantes selon la revendication 1,
dans lequel les premier à cinquième pignons (231 à 235) sont formés séparément ou divisés en un groupe de deux pignons et l'autre groupe de trois pignons.

3. L'appareil de culture de plantes selon la revendication 1,
dans lequel les première à cinquième chaînes ascenseur (311 à 315) sont configurées pour être dirigées simultanément vers le haut et vers le bas alternativement à tour de rôle vers des positions supérieure et inférieure à l'arbre d'entraînement (22) dans une forme zigzag.

4. L'appareil de culture de plantes selon la revendication 1,
dans lequel les premier à cinquième organes ascenseurs (31 à 35) comprennent en outre des supports anti-dislocation (36) dans lesquels les premier à cinquième pignons de guidage gauche et droit (321 à 325) sont installés pour empêcher les première à cinquième chaînes ascenseurs (311 à 315) d'être déplacées de leurs chemins de déplacement.
